# EUROPÄISCHE PATENTANMELDUNG

(11) **EP 2 823 786 A1**
(43) Veröffentlichungstag der Anmeldung: **14.01.2015**
(21) Anmeldenummer: 14176360.7
(22) Anmeldetag: 09.07.2014
(51) Int. Cl.: A61C 7/02, A61C 7/28

(54) **Orthodontisches Werkzeug zum Öffnen eines selbstlegierenden Brackets**

(30) Priorität: 12.07.2013 DE 102013107401
(71) Anmelder: Bernhard Förster GmbH, 75172 Pforzheim (DE)
(72) Erfinder: Förster, Rolf, 75173 Pforzheim (DE); Wagner, Carsten, 75015 Bretten (DE)
(74) Vertreter: Twelmeier Mommer & Partner

(57) **Zusammenfassung**

Die Erfindung betrifft ein orthodontisches Werkzeug zum Öffnen eines selbstligierenden Brackets, mit einem Körper (10), der an einem Ende einen Nocken (12) zum Verschieben einer Klammer (5) des Brackets aus ihrer Schließstellung in ihre Offenstellung trägt, wobei zwischen den Nocken (12) und dem Körper (10) zur Axialpositionierung des Nockens (12) in Bezug auf das zu öffnende Bracket eine Ringnut (13) ist, in die eine Oberkante des Brackets beim Verschieben der Klammer (5) aus ihrer Schließstellung in ihre Offenstellung eingreift. Die Erfindung betrifft zudem ein System mit einem solchen Werkzeug und einem selbstligierenden Bracket.

## Beschreibung

Die Erfindung betrifft ein Werkzeug zum Öffnen eines selbstligierenden Brackets.

Selbstligierende Brackets haben in der Regel eine Klammer, die mit einem unteren Schenkel in einem unter dem Slot verlaufenden Kanal liegt und mit ihrem oberen Schenkel in der Schließstellung den Slot bedeckt. Derartige Brackets sind beispielsweise in der DE 10 2005 056 184 A1 beschrieben. Zum Öffnen eines solchen Brackets muss die Klammer aus der Schließstellung in die Offenstellung verschoben werden. Dazu kann man mit einem Werkzeug in eine Öffnung des oberen Schenkels eingreifen oder das aus dem Kanal herausragende Ende des unteren Schenkels in den Kanal schieben. Ein derartiges Werkzeug wird oft als Sonde bezeichnet.

Aufgabe der vorliegenden Erfindung ist es, einen Weg aufzuzeigen, wie Kieferorthopäden das Öffnen selbstligierender Brackets erleichtert werden kann.

Diese Aufgabe wird durch ein Werkzeug mit den im Anspruch 1 angegebenen Merkmalen gelöst. Vorteilhafte Weiterbildungen der Erfindung sind Gegenstand von Unteransprüchen.

Ein erfindungsgemäßes Werkzeug hat einen Nocken, mit dem zum Öffnen des Brackets auf den unteren Schenkel einer Klammer eingewirkt wird, nämlich indem der Nocken gegen ein freies Ende des unteren Schenkels drückt und dadurch die Klammer quer zur Richtung des Slots verschiebt. Zwischen diesem Nocken und einem Körper des Werkzeugs ist eine Ringnut, die eine einfache Axialpositionierung des Nockens ermöglicht. Zum Öffnen eines Brackets wird das Werkzeug nämlich zwischen den beiden Flügeln des Brackets an dessen Oberkante angesetzt, sodass die Oberkante des Brackets in die Ringnut eingreift. Zum Verschieben der Klammer in ihre Offenstellung wird dann das Werkzeug um diese Oberkante des Brackets geschwenkt. Der Abstand von dem distalen Ende des Nockens zu der Ringnut ist dabei so bemessen, dass bei diesem Schwenkvorgang der Nocken zwangsläufig gegen den unteren Schenkel der Klammer stößt und diesen verschiebt.

Beim Gebrauch eines erfindungsgemäßen Werkzeugs ist es deshalb nicht erforderlich, das Ende des unteren Schenkels der zu verschiebenden Klammer eines Brackets zu sehen, um das Bracket öffnen zu können. Es genügt, das Werkzeug zwischen die beiden Flügel des Brackets zu führen und mit der Ringnut an die Oberkante des Brackets anzulegen. Zum Öffnen genügt dann eine einfache Schwenkbewegung des Werkzeugs. Mit einem erfindungsgemäßen Werkzeug lässt sich die Zeit, die ein Kieferorthopäde zum Öffnen eines selbstligierenden Brackets benötigt, deshalb signifikant reduzieren.

Eine vorteilhafte Weiterbildung der Erfindung sieht vor, dass die Ringnut in einem Zapfen angeordnet ist, der mit einem Ende an dem Körper und mit seinem anderen Ende an den Nocken anschließt. Dieser Zapfen hat eine größere Breite als die Breite des Nockens. Bei einem rotationssymmetrischen Nocken oder Zapfen entspricht die Breite dem maximalen Durchmesser. Der Nocken und der Zapfen müssen aber nicht unbedingt rotationssymmetrisch aufgebaut sein. Die größere Breite des Zapfens bewirkt eine Radialpositionierung des Werkzeugs, legt also den Abschnitt der Oberkante des Brackets fest, der in die Ringnut eingreift. Indem der Zapfen so bemessen ist, dass er zwischen die beiden Flügel passt, wird somit auch die radiale Positionierung des Werkzeugs mechanisch vorgegeben. Idealerweise entspricht die Breite des Zapfens also dem Abstand zwischen den beiden Flügeln des zu öffnenden Brackets. Je mehr der Abstand zwischen den beiden Flügeln die Breite des Zapfens übersteigt, desto mehr kann sich das Werkzeug beim Ansetzen an die Oberkante des Brackets entlang der Kante bewegen, desto weniger ist also seine radiale Position vorgegeben.

Bevorzugt hat der Körper in einem an die Ringnut angrenzenden Bereich eine Breite, die größer als die Breite des Zapfens ist. Besonders vorteilhaft ist es, wenn die Breite des Körpers in einem an die Ringnut angrenzenden Bereich größer als der Abstand zwischen den beiden Flügeln des zu öffnenden Brackets ist. Dadurch wird das richtige Ansetzen des Werkzeugs an das Bracket noch weiter erleichtert.

Bevorzugt bildet der Zapfen eine dem Nocken zugewandte Ringschulter. Zum Schließen eines Brackets kann der Nocken nämlich in eine Öffnung in dem oberen Schenkel der Klammer eingeführt werden. Die Ringschulter bildet dann einen vorteilhaften Anschlag beim Einsetzen des Nockens in die Öffnung der Klammer. Ein erfindungsgemäßes Werkzeug kann auf diese Weise auch sehr gut zum Schließen eines selbstligierenden Brackets verwendet werden.

Eine weitere vorteilhafte Weiterbildung der Erfindung sieht vor, dass der Körper des Werkzeugs eine an die Nut angrenzende Ringschulter bildet. Die Ringschulter bildet eine vorteilhafte Anlagefläche an die Oberkante des Brackets und erleichtert die Schwenkbewegung zum Öffnen des Brackets.

Eine weitere vorteilhafte Weiterbildung der Erfindung sieht vor, dass die Ringnut ein bogenförmiges Querschnittsprofil hat. Auf diese Weise wird vorteilhaft das Schwenken des Werkzeugs um die Oberkante des Brackets erleichtert.

Eine weitere vorteilhafte Weiterbildung der Erfindung sieht vor, dass der Zapfen und der Nocken rotationssymmetrisch ausgebildet sind. Bevorzugt sind der Zapfen und der Nocken konzentrisch, also bezüglich derselben geometrischen Rotationsachse rotationssymmetrisch. Bevorzugt ist auch ein an die Ringnut angrenzender Abschnitt des Körpers rotationssymmetrisch, beispielsweise zylindrisch ausgebildet. Bevorzugt ist dieser Abschnitt des Körpers konzentrisch mit dem Zapfen und dem Nocken.

Eine erfindungsgemäßes Werkzeug bildet zusammen mit einem selbstligierenden Bracket ein System. Das Bracket eines solchen Systems hat eine Basis zum Aufkleben auf einen Zahn, einen auf der Basis angeordneten Sockel, der wenigstens zwei Flügel und einen Slot zum Aufnehmen eines Drahtbogens aufweist. Zwischen den beiden Flügeln hat der Sockel einen unter dem Slot verlaufenden Kanal, in dem ein unterer Schenkel einer Klammer liegt, deren oberer Schenkel in ihrer Schließstellung den Slot verschließt.

Das Werkzeug und das Bracket sind so aufeinander abgestimmt, dass beim Schwenken des Werkzeugs um die Oberkante des Brackets, wenn diese in die Ringnut eingreift, der Nocken das aus dem Kanal herausragende freie Ende des unteren Schenkels der Klammer in Richtung zu dem Kanal hin verschiebt.

Weitere Einzelheiten und Vorteile der Erfindung werden an einem Ausführungsbeispiel unter Bezugnahme auf die beigefügten Zeichnungen erläutert. Es zeigen:
- Fig. 1: eine Detailansicht eines Werkzeugs sowie eine Schnittansicht eines selbstligierenden Brackets; und
- Fig. 2 bis Fig. 9: eine Abfolge von Positionen des Werkzeugs beim Öffnen des Brackets.

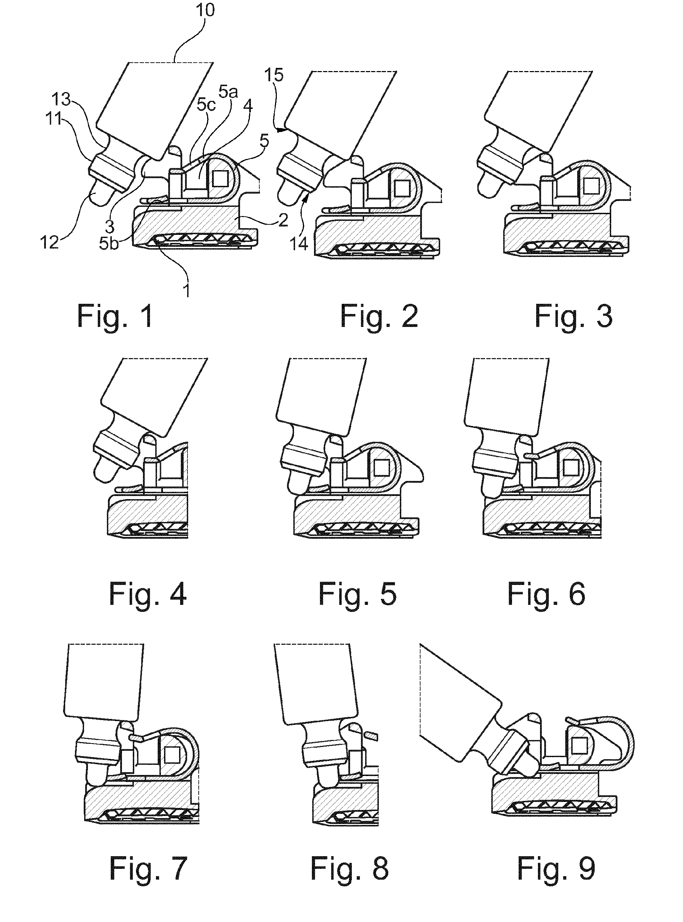

In den Figuren 1 bis 9 ist schematisch ein Beispiel eines möglichen Bewegungsablaufs zum Öffnen eines selbstlegierenden Brackets dargestellt. Das Bracket ist in den Figuren 1 bis 9 in einer Schnittansicht dargestellt. Von dem zum Öffnen verwendeten Werkzeug ist nur dessen vorderer Teil dargestellt, der beim Öffnen des Brackets mit diesem in Wechselwirkung tritt. Ebenso wie gebräuchliche Sonden für Kieferorthopäden hat das Werkzeug einen länglichen Körper, der ein einfaches Greifen des Werkzeugs ermöglicht.

Das Bracket hat eine Basis zum Aufkleben auf einen Zahn, einen auf der Basis 1 angeordneten Sockel 2, der zwei Ligaturenflügel 3 und einen Slot 4 zum Aufnehmen eines Drahtbogens aufweist. Die Schnittebene der Figuren 1 bis 9 verläuft senkrecht zu dem Slot 4, sodass nur einer der beiden Ligaturenflügel 3 zu sehen ist. Der Slot 4 wird von einer Klammer 5 verschlossen. In der in Figur 1 dargestellten Verschlussstellung der Klammer 5 bedeckt ein oberer Schenkel 5a der Klammer 5 den Slot 4. Ein unterer Schenkel 5b der Klammer 5 liegt in einem Kanal, der in dem Sockel 2 unter dem Slot 4 verläuft. Der untere Schenkel 5b ragt mit seinem freien Ende aus dem Kanal heraus und ist an seinem anderen Ende mit dem oberen Schenkel 5a verbunden.

Das Werkzeug hat einen Körper 10, der an einem Ende einen Zapfen 11 mit einem Nocken 12 trägt. Der Körper 10, der Zapfen 11 und der Nocken 12 sind bevorzugt rotationssymmetrisch um dieselbe geometrische Rotationsachse ausgebildet. Der Zapfen 11 weist eine Ringnut 13 auf. Diese Ringnut 13 wird zum Öffnen des Brackets eine Oberkante des Brackets zwischen den beiden Flügeln 3 angelegt.

In Figur 1 liegt der Körper 10 des Werkzeugs an der Oberkante des Brackets zwischen den beiden Flügeln 3 an. Zum Öffnen des Brackets wird der Körper 10 deshalb nach oben gezogen, bis die Oberkante des Brackets in die Ringnut 13 eingreift. Diese Position des Werkzeugs ist in Figur 4 dargestellt.

Wenn die Oberkante des Brackets in die Ringnut 13 eingreift, wird das Werkzeug um die Oberkante geschwenkt. Dabei wird der Nocken 12 zu dem unteren Schenkel 5b der Klammer 5 hin bewegt und schiebt dann das untere Ende der Klammer 5 zu dem Kanal, so dass die Klammer 5 aus ihrer Schließstellung in ihre Offenstellung bewegt wird. Die Ringnut 13 bewirkt also eine axiale Positionierung des Werkzeugs in Bezug auf das Bracket. Das Werkzeug und das Bracket sind nämlich so bemessen und aufeinander abgestimmt, dass beim Schwenken des Werkzeugs um die Oberkante des Brackets, wenn diese der Ringnut 13 liegt, der Nocken 12 den unteren Schenkel 5b der Klammer 5 trifft und dann verschiebt. Die Klammer 5 wird dabei senkrecht zur Richtung des Slots 4 verschoben. Das aus dem Kanal herausragende freie Ende des unteren Schenkels 5b der Klammer 5, auf das der Nocken 12 bei der Schwenkbewegung trifft, wird dabei hin zu dem Slot 4 verschoben.

Die Ringnut 13 hat bevorzugt einen bogenförmigen Querschnitt, um den Schwenkvorgang zu erleichtern. Der Maximaldurchmesser des Zapfens11 ist passend zu dem Abstand zwischen den beiden Ligaturenflügeln 3 bemessen. Der Zapfen 11 des Brackets bewirkt somit eine Radialpositionierung des Werkzeugs in Bezug auf das Bracket. Der Nocken 12 ist dünner als der Zapfen 11. Zum Betätigen der Klammer 5 kann der Nocken 12 deshalb auch in eine Öffnung 5c im oberen Schenkel 5a der Klammer 5 eingeführt werden. Eine Ringschulter 14, die der Zapfen 11 an seinem dem Nocken 12 zugewandten Ende bildet, wirkt dabei als Anschlag.

Der Körper 10 des Werkzeugs ist breiter als der Zapfen 11. Bevorzugt ist der Körper 10 breiter als der Abstand zwischen den beiden Ligaturenflügeln 3 des Brackets, was das Positionieren des Werkzeugs an dem Bracket erleichtert. Der Körper 10 kann an seinem dem Zapfen 11 zugewandten Ende eine Ringschulter 15 ausbilden, um eine vorteilhaft große Anlagefläche zu bilden, an der die Oberkante des Brackets bei der Schwenkbewegung anliegt.

Der Nocken 12 kann einen zylindrischen Abschnitt aufweisen und ist an seinem distalen Enden bevorzugt ballig gerundet. Auf diese Weise kann der Nocken 12 bei der Schwenkbewegung des Werkzeugs vorteilhaft auf dem Sockel 2 gleiten. Ein Verkanten des Werkzeugs wird durch eine ballige Rundung des Nockens 12 verhindert.

Der Zapfen 11 kann zwischen der Ringnut 13 und dem Nocken 12 einen zylindrischen Abschnitt haben, wie dies in den Figuren dargestellt ist. Bevorzugt grenzt die Ringschulter 14 des Zapfens 11 an einen sich verjüngenden Abschnitt des Zapfens 11 an. Auf diese Weise kann der Zapfen 11 bei der Schwenkbewegung vorteilhaft an der den Slot 4 begrenzenden Seitenwand entlang gleiten, deren Oberkante in die Ringnut 13 des Werkzeugs eingreift.

### Bezugszahlen

- 1.: Basis
- 2.: Sockel
- 3.: Ligaturenflügel
- 4.: Slot
- 5.: Klammer
- 5a.: oberer Schenkel
- 5b.: unterer Schenkel
- 10.: Körper
- 11.: Zapfen
- 12.: Nocken
- 13.: Ringnut
- 14.: Ringschulter
- 15.: Ringschulter

## Patentansprüche

1. Orthodontisches Werkzeug zum Öffnen eines selbstligierenden Brackets, mit einem Körper (10), der an einem Ende einen Nocken (12) zum Verschieben einer Klammer (5) des Brackets aus ihrer Schließstellung in ihre Offenstellung trägt,
wobei zwischen den Nocken (12) und dem Körper (10) zur Axialpositionierung des Nockens (12) in Bezug auf das zu öffnende Bracket eine Ringnut (13) ist, in die eine Oberkante des Brackets beim Verschieben der Klammer (5) aus ihrer Schließstellung in ihre Offenstellung eingreift.

2. Orthodontisches Werkzeug nach Anspruch 1, **dadurch gekennzeichnet, dass** die Ringnut (13) in einem Zapfen (11) ist, der zwischen dem Körper (10) und dem Nocken (12) angeordnet ist und eine Breite hat, die größer als die Breite des Nockens (12) ist.

3. Orthodontisches Werkzeug nach Anspruch 2, **dadurch gekennzeichnet, dass** der Körper (10) in einem an die Ringnut (13) angrenzenden Bereich eine Breite hat, die größer als die Breite des Zapfens (11) ist.

4. Orthodontisches Werkzeug nach Anspruch 3, **dadurch gekennzeichnet, dass** der Körper (10) eine an die Ringnut (13) angrenzende Ringschulter (15) bildet

5. Orthodontisches Werkzeug nach einem der Ansprüche 2 bis 4, **dadurch gekennzeichnet, dass** der Zapfen (11) einen zylindrischen Abschnitt aufweist.

6. Orthodontisches Werkzeug nach einem der Ansprüche 2 bis 5, **dadurch gekennzeichnet, dass** der Zapfen (11) eine dem Nocken (12) zugewandte Ringschulter (14) bildet.

7. Orthodontisches Werkzeug nach Anspruch 6, **dadurch gekennzeichnet, dass** der Zapfen (11) einen Abschnitt aufweist, der an die Ringschulter (14) des Zapfens (11) angrenzt und sich zu dieser Ringschulter (14) hin verjüngt.

8. Orthodontisches Werkzeug nach einem der vorstehenden Ansprüche, **dadurch gekennzeichnet, dass** der Nocken (12) ein ballig gerundetes Ende hat.

9. Orthodontisches Werkzeug nach einem der vorstehenden Ansprüche, **dadurch gekennzeichnet, dass** die Ringnut (13) einen bogenförmigen Querschnitt hat.

10. System mit einem orthodontischen Werkzeug nach einem der vorstehenden Ansprüche, und einem selbstligierenden Bracket, das eine Basis (1) zum Aufkleben auf einen Zahn, einen auf der Basis (1) angeordneten Sockel (2), der wenigstens zwei Flügel (3) und einen Slot (4) zum Aufnehmen eines Drahtbogens aufweist, wobei der Sockel (2) zwischen den beiden Flügeln (3) einen unter dem Slot (4) verlaufenden Kanal aufweist, in dem ein Schenkel (5b) einer Klammer (5) liegt, deren anderer Schenkel (5b) in ihrer Schließstellung den Slot (4) bedeckt.

11. System nach Anspruch 10, **dadurch gekennzeichnet, dass** der Körper (10) des Werkzeugs in einem an die Ringnut (13) angrenzenden Bereich eine Breite hat, die größer als der Abstand zwischen den beiden Flügeln (3) des Brackets ist.

12. System nach Anspruch 10 oder 11 und einem der Ansprüche 2 bis 7, **dadurch gekennzeichnet, dass** der Zapfen (11) zur Radialpositionierung zwischen den beiden Flügeln (3) des Brackets eine zum Abstand zwischen den beiden Flügeln (3) passende Breite hat.
